Europäisches Patentamt

European Patent Office

Office européen des brevets

(19)

(11) Numéro de publication: **0 221 791 B1**

# FASCICULE DE BREVET EUROPEEN

(12)

(45) Date de publication de fascicule du brevet:
27.02.91

(51) Int. Cl.⁵: **B60T 13/24**

(21) Numéro de dépôt: 86402049.0

(22) Date de dépôt: **18.09.86**

(54) **Ensemble de valve de distribution pour servomoteur pneumatique d'assistance au freinage.**

(30) Priorité: 30.09.85 FR 8514453

(43) Date de publication de la demande:
13.05.87 Bulletin 87/20

(45) Mention de la délivrance du brevet:
27.02.91 Bulletin 91/09

(84) Etats contractants désignés:
**DE GB IT**

(56) Documents cités:
**FR-A- 1 512 696**
**GB-A- 2 060 100**
**US-A- 2 828 719**

(73) Titulaire: **BENDIX EUROPE Services Techniques S.A.**
**126 rue de Stalingrad**
**F-93700 Drancy(FR)**

(72) Inventeur: **Blot, Jean-Claude**
**37, rue Jules Fossier**
**F-95380 Louvres(FR)**

(74) Mandataire: **Lejet, Christian**
**Bendix Europe Service Techniques Service**
**Brevets 126 rue de Stalingrad**
**F-93700 Drancy(FR)**

## Description

La présente invention concerne les servomoteurs pneumatiques d'assistance au freinage et, plus particulièrement, un ensemble de valve de distribution pour de tels servomoteurs d'assistance, du type comprenant, dans un moyeu tubulaire de piston d'assistance du servomoteur, un élément de clapet élastique associé à un support d'élément de clapet et comprenant une partie active annulaire coopérant sélectivement avec deux sièges de clapet concentriques formés respectivement dans le moyeu et par un plongeur de valve coulissant dans le moyeu et couplé à une tige d'entrée du servomoteur, et une partie de montage extérieure disposée en étanchéité entre une paroi interne du moyeu tubulaire et le support d'élément de clapet monté dans le moyeu tubulaire, un ressort de rappel de tige entre le support d'élément de clapet et un appui sur la tige, et un ressort de clapet entre le support d'élément de clapet et la partie active de l'élément de clapet pour solliciter cette dernière dans la direction vers les sièges de clapet, le support d'élément de clapet comportant une zone d'extrémité intérieure s'étendant radialement vers l'intérieur au voisinage de la partie active de l'élément de clapet et formant appui pour le ressort de clapet.

Un ensemble de ce type est décrit dans les documents FR-A-1 512 696, et EP-A-0 101 658 dont les contenus sont supposés intégrés ici pour référence. Dans l'ensemble de valve de distribution de chacun de ces documents, le ressort de clapet est réalisé sous la forme d'un ressort hélicoïdal présentant nécessairement une longueur axiale relativement importante imposant un dimensionnement corrélatif de l'élément de clapet, dans un agencement susceptible d'induire, par ailleurs, des problèmes de désalignement ou de mise en biais de la partie active du clapet vis-à-vis des sièges de clapet concentriques.

La présente invention a pour objet de proposer un ensemble de valve de distribution du type susmentionné, de conception fiable et robuste, de faibles coûts de fabrication et permettant une dispersion moindre des caractéristiques des ressorts pour une fabrication en grande série.

Pour ce faire, selon une caractéristique de l'invention, le ressort de clapet est constitué par une rondelle élastique bombée du type Belleville, cette rondelle élastique comportant avantageusement des doigts radiaux intérieurs déformés axialement pour présenter la force élastique requise.

D'autres caractéristiques et avantages de la présente invention ressortiront de la description suivante d'un mode de réalisation, donné à titre illustratif mais nullement limitatif, faite en relation avec les dessins annexés, sur lesquels :

- la Figure 1 est une vue schématique en coupe longitudinale d'un ensemble de valve de distribution de servomoteur pneumatique d'assistance au freinage selon l'invention ; et
- la Figure 2 est une vue partielle en plan de la rondelle élastique formant ressort de clapet de l'ensemble de la Figure 1.

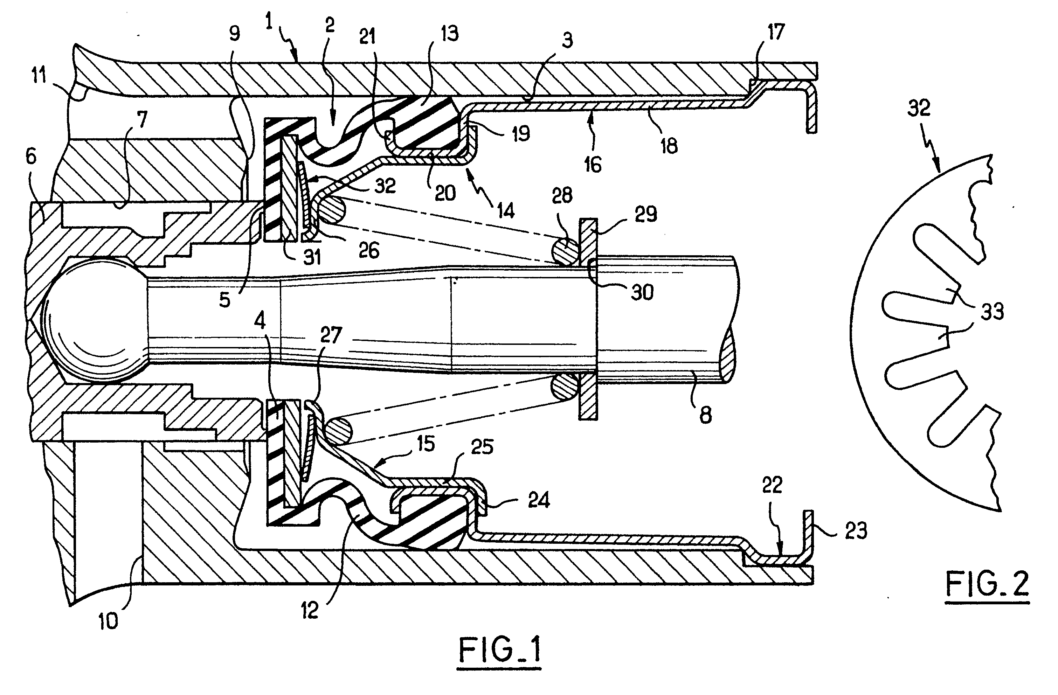

On reconnaît sur cette Figure 1 la partie de moyeu tubulaire arrière 1 d'un ensemble de piston d'assistance (non représenté) divisant intérieurement un boîtier de servomoteur (non représenté) en une chambre de dépression avant et une chambre de travail arrière, cette dernière étant mise sélectivement en communication avec la chambre de dépression avant ou avec l'atmosphère par l'intermédiaire d'un élément de clapet classique, annulaire, désigné généralement par la référence 2, disposé dans un logement interne 3 du moyeu tubulaire 1 et comportant une partie active annulaire frontale 4 susceptible de coopérer sélectivement avec un premier siège de clapet 5 formé à l'extrémité arrière d'un plongeur de valve 6 monté à coulissement dans un alésage central 7 du moyeu 1 et couplé à l'extrémité d'une tige d'actionnement d'entrée 8 du servomoteur, et avec un second siège de clapet 9 formé dans le moyeu 1 concentriquement autour du plongeur 6. En coopérant avec les sièges de clapet 5 et 9, la partie active 4 de l'élément de clapet 2 permet ainsi de commander la communication entre un passage radial 10 formé dans le moyeu 1, communiquant avec la chambre de travail arrière du servomoteur et débouchant dans l'alésage 7, soit avec l'atmosphère régnant dans le logement 3 du moyeu tubulaire 1, autour de la tige d'entrée 8, soit avec la chambre de dépression avant du servomoteur via au moins un passage 11 formé axialement dans le moyeu 1 et débouchant dans une zone de raccordement entre l'extrémité intérieure du logement 3 et la périphérie externe du siège de clapet 9.

La partie active annulaire frontale 4 de l'élément de clapet 2 est reliée, par une partie de voile en tulipe s'évasant radialement vers l'extérieur 12, à une partie de montage ou bourrelet extérieur annulaire 13 comprimé entre la paroi du logement 3 et un support d'élément de clapet désigné généralement par la référence 14. Dans le mode de réalisation représenté, le support d'élément de clapet 14 est constitué par l'assemblage d'une partie avant 15 et d'une partie arrière 16 réalisées toutes deux avantageusement en tôle. Dans le mode de réalisation représenté, le logement interne 3 du moyeu tubulaire 1 se présente sous la forme d'un alésage cylindrique lisse à diamètre constant s'étendant sur la majeur partie de l'extension axiale du moyeu tubulaire 1, avec un petit décrochement arrière 17 s'étendant radialement vers l'extérieur formé à l'extrémité arrière du moyeu tubulaire 1.

La partie arrière 16 du support d'élément de clapet 14 comporte en conséquence une partie principale tubulaire 18 conformée, à son extrémité avant, pour former une gouttière annulaire décalée radialement vers l'intérieur comportant une face radiale arrière 19 se raccordant à la partie principale tubulaire 18, et une face axiale intérieure 20 se terminant, vers l'avant par une courte face radiale avant 21 s'étendant radialement vers l'extérieur. L'extrémité arrière de la partie principale tubulaire 18 forme une gouttière 22 décalée radialement vers l'extérieur, emmanchée dans le décrochement arrière 17 du moyeu 1 et comportant avantageusement une patte d'extrémité 23 rabattue radialement vers l'intérieur pour le montage du bourrelet d'extrémité d'un soufflet d'étanchéité (non représenté) s'étendant axialement autour du moyeu tubulaire 1 et venant se reprendre sur la coquille arrière du boîtier de servomoteur.

Dans le mode de réalisation représenté, la partie avant 15 du support d'élément de clapet 14 comporte une extrémité extérieure arrière annulaire s'étendant radialement vers l'extérieur 24 prenant appui contre la face radiale arrière 19 de la gouttière avant de la partie arrière 16 du support d'élément de clapet 14 et se raccordant à une zone axiale 25 coopérant avec la face axiale intérieure 20 de la gouttière avant de la partie arrière 16 du support 14. Cette zone axiale 25 de la partie avant 15 du support 14 se prolonge vers l'avant par une partie intermédiaire convergeant vers l'avant et radialement vers l'intérieur et se terminant par une zone d'extrémité intérieure s'étendant radialement vers l'intérieur 26, au voisinage de la face arrière de la partie active 4, et elle-même terminée par un petit arrondi d'extrémité 27 s'étendant axialement vers l'avant.

Comme on le voit bien sur la figure 1, la partie de montage ou bourrelet extérieur 13 de l'élément de clapet 2 est montée dans la gouttière avant 19-20-21 de la partie arrière 16 du support d'élément de clapet 14 et est maintenue en compression radiale dans le logement 3 entre la paroi interne de celui-ci et la gouttière en étant positionnée axialement dans le logement 3 par le montage de la gouttière arrière 22 dans le décrochement arrière 17 du moyeu 1. La partie avant 15 du support d'élément de clapet 14 est positionnée et maintenue dans la position décrite ci-dessus et représentée sur la Figure 1 par un ressort hélicoïdal troncoïnique de rappel de tige 28 disposé entre la face arrière de la zone d'extrémité radiale 26 et une rondelle 29 montée sur la tige d'entrée 8 et coopérant avec un épaulement 30 de cette dernière.

Conformément à l'invention, entre la plaque annulaire d'armure 31, dont est pourvue classiquement la partie active frontale 4 de l'élément de clapet 2, et la face avant de la zone d'extrémité radiale 26 de la partie avant 15 du support d'élément de clapet 14, qui est dimensionnée de façon que cette zone d'extrémité radiale 26 s'étende au voisinage de la plaque d'armure 31, parallèlement à cette dernière, est disposée une rondelle élastique bombée 32 sollicitant axialement la partie active 4 de l'élément de clapet 2 dans la direction vers les sièges de clapet 5 et 9. Comme on le voit sur la figure 2, la rondelle élastique 32, du type rondelle Belleville, comprend avantageusement des doigts radiaux intérieurs 33 déformés axialement pour présenter la force élastique requise. En variante, la rondelle élastique 32 peut constituer elle-même l'armure 31 de la partie active 4 de l'élément de clapet 2, seuls un nombre réduit de doigts radiaux 33 étant dans ce cas déformés axialement pour assurer l'élasticité requise.

## Revendications

1. Ensemble de valve de distribution pour servomoteur pneumatique d'assistance au freinage, comprenant, dans un moyeu tubulaire (1) de piston d'assistance du servomoteur, un élément de clapet élastique (2) associé à un support d'élément de clapet (14) et comprenant une partie active annulaire (4) coopérant sélectivement avec deux sièges de clapet concentriques (9 ; 5) formés respectivement dans le moyeu (1) et par un plongeur de valve (6) coulissant dans le moyeu et couplé à une tige d'entrée (8) du servomoteur, et une partie de montage extérieure (13) disposée en étanchéité entre une paroi interne (3) du moyeu tubulaire (1) et le support d'élément de clapet (14) monté dans le moyeu tubulaire (1), un ressort de rappel de tige (28) entre le support d'élément de clapet (14) et un appui (29 ; 30) sur la tige (8), et un ressort de clapet (32) entre le support d'élément de clapet (14) et la partie active (4) de l'élément de clapet (2) pour solliter cette dernière dans la direction vers les sièges de clapet (9 ; 5), le support d'élément de clapet (14) comportant une zone d'extrémité intérieure (26) s'étendant radialement vers l'intérieure au voisinage de la partie active (4) de l'élément de clapet (2) et formant appui pour le ressort de clapet, caractérisé en ce que le ressort de clapet est constitué par une rondelle élastique bombée (32) de type Belleville.

2. Ensemble selon la revendication 1, caractérisé en ce que le ressort de rappel de tige (28) prend appui sur la zone d'extrémité intérieure (26) du support d'élément de clapet (14).

3. Ensemble selon la revendication 1 ou 2, caractérisé en ce que le support d'élément de clapet (14) forme une gouttière annulaire (19 ; 20 ; 21) recevant la partie de montage extérieure (13) de l'élément de clapet (2).

4. Ensemble selon l'une des revendications précédentes, caractérisé en ce que le support d'élément de clapet (14) comporte une partie tubulaire arrière (18) terminée par une extrémité décalée radialement vers l'extérieur (22) et reçue dans un décrochement arrière (17) du moyeu tubulaire (1).

5. Ensemble selon la revendication 4, caractérisé en ce que la paroi interne (3) du moyeu tubulaire est cylindrique, lisse.

6. Ensemble selon l'une des revendications 3 à 5, caractérisé en ce que la zone d'extrémité intérieure (26) du support d'élément de clapet (14) est constituée par une partie de support avant (15) rapportée sur la gouttière annulaire (19 ; 20 ; 21).

7. Ensemble selon la revendication 6, caractérisé en ce que la gouttière (19 ; 20 ; 21) comporte une face axiale intérieure (20) et une face radiale arrière (19), la partie de support avant (15) comportant une extrémité extérieure (24) s'étendant radialement vers l'extérieur et coopérant en appui contre la face radiale arrière (19) de la gouttière (19 ; 20 ; 21).

8. Ensemble selon la revendication 7, caractérisé en ce que l'extrémité extérieure radiale (24) de la partie de support avant (15) se raccorde à une zone axiale (25) coopérant avec la face axiale intérieure (20) de la gouttière (19 ; 20 ; 21).

9. Ensemble selon l'une des revendications 4 à 8, caractérisé en ce que la gouttière annulaire (19 ; 20 ; 21) et la partie tubulaire arrière (18) sont constituées par une partie arrière (16) du support d'élément de clapet (14).

10. Ensemble selon l'une des revendications précédentes, caractérisé en ce que le support d'élément de clapet (14) est réalisé en tôle.

11. Ensemble selon la revendication 1, caractérisé en ce que la rondelle élastique (32) comprend des doigts radiaux intérieurs (33) déformés axialement pour présenter la force élastique requise.

**Claims**

1. Distribution valve assembly for a pneumatic brake booster, comprising, inside a tubular hub (1) of a booster piston, a resilient valve member (2) associated with a valve-member support (14) and comprising an annular active part (4) cooperating selectively with two concentric valve seats (9; 5) formed respectively, in the hub (1) and by a valve plunger (6) sliding inside the hub and being coupled to an input rod (8) of the booster, and an external mounting part (13) sealingly arranged between an internal wall (3) of the tubular hub (1) and the valve-member support (14) mounted in the tubular hub (1), a rod return spring (28) between the valve-member support (14) and a bearing surface (29; 30) on the rod (8), and a valve spring (32) between the valve-member support (14) and the active part (4) of the valve member (2) so as to bias the active part in the direction of the valve seats (9; 5); the valve-member support (14) having an internal end zone (26) extending radially inwards near the active part (4) of the valve member (2) and forming a bearing for the valve spring, characterized in that the valve spring consists of a domed elastic washer (32) of the Belleville type.

2. Assembly according to Claim 1, characterized in that the rod return spring (28) bears against the internal end zone (26) of the valve-member support (14).

3. Assembly according to Claim 1 or 2, characterized in that the valve-member support (14) forms an annular channel (19; 20; 21) receiving the external mounting part (13) of the valve member (2).

4. Assembly according to any of the preceding claims, characterized in that the valve-member support (14) has a rear tubular part (18) having an end (22) which is offset radially outwards and received in a rear indentation (17) in the tubular hub (1).

5. Assembly according to Claim 4, characterized in that the internal wall (3) of the tubular hub is cylindrical and smooth.

6. Assembly according to any of Claims 3 to 5, characterized in that the internal end zone (26) of the valve-member support (14) consists of a front support part (15) mounted on the annular channel (19; 20; 21).

7. Assembly according to Claim 6, characterized in that the channel (19; 20; 21) has an internal axial surface (20) and a rear radial surface (19), the front support part (15) having an external end (24) extending radially outwards and cooperating so as to bear against the rear radial surface (19) of the channel (19; 20; 21).

8. Assembly according to Claim 7, characterized in that the radial external end (24) of the front support part (15) is connected to an axial zone (25) cooperating with the internal axial surface (20) of the channel (19; 20; 21).

9. Assembly according to any of Claims 4 to 8, characterized in that the annular channel (19; 20; 21) and the rear tubular part (18) consist of a rear part (16) of the valve-member support (14).

10. Assembly according to any of the preceding claims, characterized in that the valve-member support (14) is made of sheet metal.

11. Assembly according to Claim 1, characterized in that the elastic washer (32) comprises inner radial fingers (33) deformed axially so as to have the required elastic force.


**Ansprüche**

1. Verteilerventilgruppe für einen pneumatischen Bremshilfe-Servoantrieb, die in einer rohrförmigen Nabe (1) des Hilfskolbens des Servoantriebs ein elastisches Ventildeckelelement (2), das mit einem Träger (14) des Ventildeckelelementes verbunden ist und einen ringförmigen aktiven Teil (4) umfaßt, der wahlweise mit zwei jeweils in der Nabe (1) gebildeten konzentrischen Ventilsitzen (9; 5) mittels eines in der Nabe gleitenden und mit einer Einlaßstange (8) des Servoantriebs gekoppelten Ventiltauchkolbens (6) zusammenwirkt, wobei der Träger (14) des Ventildeckelelementes in der rohrförmigen Nabe (1) angebracht ist, eine Feder zum Rückstellen der Stange (28) zwischen dem Träger (14) des Ventildeckelelementes und einer Abstützfläche (29; 30) an der Stange (8) und eine Ventilfeder (32) zwischen dem Träger (14) des Ventildeckelelementes und dem aktiven Teil (4) des Ventildeckelelementes (2), um das letztere in Richtung der Ventilsitze (9; 5) vorzuspannen, umfaßt, wobei der Träger (14) des Ventildeckelelementes einen inneren Endbereich (26) umfaßt, der sich in radialer Richtung nach innen in die Umgebung des aktiven Teils (4) des Ventildeckelelementes (2) erstreckt und für die Ventilfeder eine Stützfläche bildet, dadurch gekennzeichnet, daß die Ventilfeder durch eine elastische gewölbte Scheibe (32) vom Belleville-Typ gebildet wird.

2. Gruppe gemäß Anspruch 1, dadurch gekennzeichnet, daß sich die Stangenrückstellfeder (28) auf dem inneren Endbereich (26) des Trägers (14) des Ventildeckelelementes abstützt.

3. Gruppe gemäß Anspruch 1 oder 2, dadurch gekennzeichnet, daß der Träger (14) des Ventildeckelelementes eine ringförmige Rinne (19; 20; 21) bildet, die das äußere Bauteil (13) des Ventildeckelelementes (2) aufnimmt.

4. Gruppe gemäß einem der vorangehenden Ansprüche, dadurch gekennzeichnet, daß der Träger (14) des Ventildeckelelementes einen rückwärtigen hinteren Teil (18) enthält, der durch ein in radialer Richtung nach außen abgesetztes und von einem hinteren Absatz (17) der rohrförmigen Nabe (1) aufgenommenes Ende abgeschlossen wird.

5. Gruppe gemäß Anspruch 4, dadurch gekennzeichnet, daß die Innenwand (3) der rohrförmigen Nabe zylindrisch und glatt ist.

6. Gruppe gemäß einem der Ansprüche 3 bis 5, dadurch gekennzeichnet, daß der innere Endbereich (26) des Trägers (14) des Ventildeckelelementes durch ein in die ringförmige Rinne (19; 20; 21) eingesetztes vorderes Trägerteil (15) gebildet wird.

7. Gruppe gemäß Anspruch 6, dadurch gekennzeichnet, daß die Rinne (19; 20; 21) eine innere axiale Fläche (20) und eine rückwärtige radiale Fläche (19) enthält, wobei das vordere Trägerteil (15) ein äußeres Ende (24) umfaßt, das sich in radialer Richtung nach außen erstreckt und sich gegen die rückwärtige radiale Fläche (19) der Rinne (19; 20; 21) abstützt.

8. Gruppe gemäß Anspruch 7, dadurch gekennzeichnet, daß das äußere radiale Ende (24) des vorderen Trägerteils (15) an einen mit der inneren axialen Fläche (20) der Rinne (19; 20; 21) zusammenwirkenden axialen Bereich (25) anschließt.

9. Gruppe gemäß einem der Ansprüche 4 bis 8, dadurch gekennzeichnet, daß die ringförmige Rinne (19; 20; 21) und der rückwärtige röhrenförmige Teil (18) durch einen rückwärtigen Teil (16) des Trägers (14) des Ventildeckelelementes gebildet werden.

10. Gruppe gemäß einem der vorangehenden Ansprüche, dadurch gekennzeichnet, daß der Träger (14) des Ventildeckelelementes aus Blech hergestellt ist.

11. Gruppe gemäß Anspruch 1, dadurch gekennzeichnet, daß die elastische gewölbte Scheibe (32) innere radiale Zapfen (33) umfaßt, die axial verzogen sind, damit sie die erforderliche Federkraft aufweisen.

FIG. 2

FIG_1